# EUROPEAN PATENT APPLICATION

(11) **EP 3 911 047 A2**
(43) Date of publication of application: **17.11.2021**
(21) Application number: 21171765.7
(22) Date of filing: 03.05.2021
(51) Int. Cl.: H04W 56/00

(54) **SERVICE AREA FOR TIME SYNCHRONIZATION**

(30) Priority: 14.05.2020 US 202063024757 P
(71) Applicant: Nokia Technologies Oy, 02610 Espoo (FI)
(72) Inventor: CHANDRAMOULI, Devaki, Plano, 75025 (US); ANDRÉS MALDONADO, Pilar, Aalborg (DK)
(74) Representative: Nokia EPO representatives

(57) **Abstract**

Systems, methods, apparatuses, and computer program products for defining service area(s) for time synchronization. A method may include receiving, at a user equipment, time synchronization service area information from a network node in a network. The method may also include selecting a cell for connection based on the time synchronization service area information. The selected cell may maintain a time domain required by the user equipment to remain synchronized with the network.

## Description

### FIELD:

Some example embodiments may generally relate to mobile or wireless telecommunication systems, such as Long Term Evolution (LTE) or fifth generation (5G) radio access technology or new radio (NR) access technology, or other communications systems. For example, certain example embodiments may relate to apparatuses, systems, and/or methods for defining service area(s) for time synchronization.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G is mostly built on a new radio (NR), but the 5G (or NG) network can also build on E-UTRAN radio. It is estimated that NR will provide bitrates on the order of 10-20 Gbit/s or higher, and will support at least enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. It is noted that, in 5G, the nodes that can provide radio access functionality to a user equipment (i.e., similar to Node B in UTRAN or eNB in LTE) are named gNB when built on NR radio and named NG-eNB when built on E-UTRAN radio.

### BRIEF DESCRIPTION OF THE DRAWINGS:

For proper understanding of example embodiments, reference should be made to the accompanying drawings, wherein:
FIG. 1 illustrates an example of a time sensitive network (TSN) deployment and downlink (DL) time synchronization of a user equipment (UE).
FIG. 2 illustrates a time synchronization service area concept, according to certain example embodiments.
FIG. 3 illustrates a signal diagram for time synchronization service area indication to the UE, according to certain example embodiments.
FIG. 4 illustrates a signal diagram of cell re-selection that considers time synchronization service area, according to certain example embodiments.
FIG. 5 illustrates a signal diagram of handover that considers time synchronization service area, according to certain example embodiments.
FIG. 6 illustrates a flow diagram of another method, according to certain example embodiments.
FIG. 7 illustrates a flow diagram of a further method, according to certain example embodiments.
FIG. 8(a) illustrates an apparatus, according to certain example embodiments.
FIG. 8(b) illustrates another apparatus, according to certain example embodiments.

### SUMMARY

According some aspects, there is provided the subject matter of the independent claims. Some further aspects are defined in the dependent claims. The embodiments that do not fall under the scope of the claims are to be interpreted as examples useful for understanding the disclosure.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and computer program products for defining service area(s) for time synchronization.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as merely illustrative of the principles and teachings of certain example embodiments, and not in limitation thereof.

3^{rd} Generation Partnership Project (3GPP) Rel-16 describes support for time sensitive networking (TSN) provided by the 5G System (5GS). In particular, the 5GS may include two synchronization processes: 5GS synchronization and TSN domain synchronization. Each process may be considered independent from each other, and the gNB may be synchronized to the 5G Grand Master (GM) clock. For the distribution of the 5G internal system clock, the 5G internal system clock may be available to all user plane nodes in the 5G system. In addition, the user plane function (UPF) and network TSN translator (NW-TT) may obtain the 5G internal system clock via the underlying precision time protocol (PTP) compatible transport network with mechanisms outside the scope of 3GPP. For the distribution of the TSN clock, this may follow IEEE 802.1AS. In addition, the TTs located at the edge of 5GS may fulfill the functions related to IEEE 802.1AS. Furthermore, the UPF may forward the generic precision time protocol (gPTP) message to the user equipment (UE) via the user plane (i.e., using the protocol data unit (PDU) session applicable for sending gPTP).

The integration of TSN/time synchronization support and 5G wireless networks may exhibit certain challenges. One of these challenges may relate to the mobility of the user equipments (UEs). In particular, certain 5GS networks may be connected to a TSN network that supports N time domains (TD). For TSN devices, the supported TD may be important and, thus, it may be desirable for the end device to remain in the network that supports the given TD.

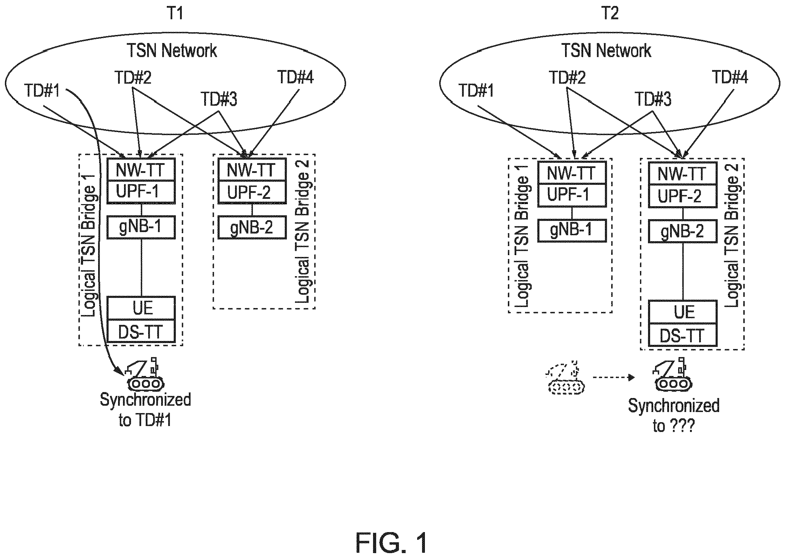

FIG. 1 illustrates an example of a TSN deployment and downlink (DL) time synchronization of a UE. In particular, FIG. 1 illustrates a first 5GS network (UPF-1/gNB-1), which supports connectivity to the TSN network with TDs #1, #2, and #3. FIG. 1 also illustrates a second 5GS network (UPF-2/gNB-2), which supports connectivity to the TSN network with TDs #2, #3, and #4. When the UE moves, it may be desirable to ensure that it remains in the network that has connectivity towards TDs as required for the TSN end devices. It may also be desirable to ensure that the absolute time synchronization is not affected by a handover (HO) situation. These may be important considerations in certain instances including, for example, when the target cell is using propagation delay (PD) compensation. However, the configuration in the target cell may be different than in the source cell (e.g., use or UE-based or network-based PD compensation). In another situation, the target cell may be up to 3 µs out of synchronization compared to the serving cell.

Other challenges may exist in time synchronization support for a vertical clock in 5GS integration in TSN networks. Such challenges may be due to the UE's mobility and time synchronization requirements that are novel for 5G, and have not yet been addressed. Further, time synchronization may be supported in a homogenous manner in the whole network (e.g., public land mobile network (PLMN)/non-public network (NPN)). This may be true for both 5G TD and external TD for IEEE TSN time sync. As such, there may be no dynamic time synchronization service area that exists nor considered during idle mobility or connected mode HO by the UE and network, respectively. Thus, certain example embodiments may define a time synchronization area within 5GS as an area where the network is able to support time synchronization for a certain external TD.

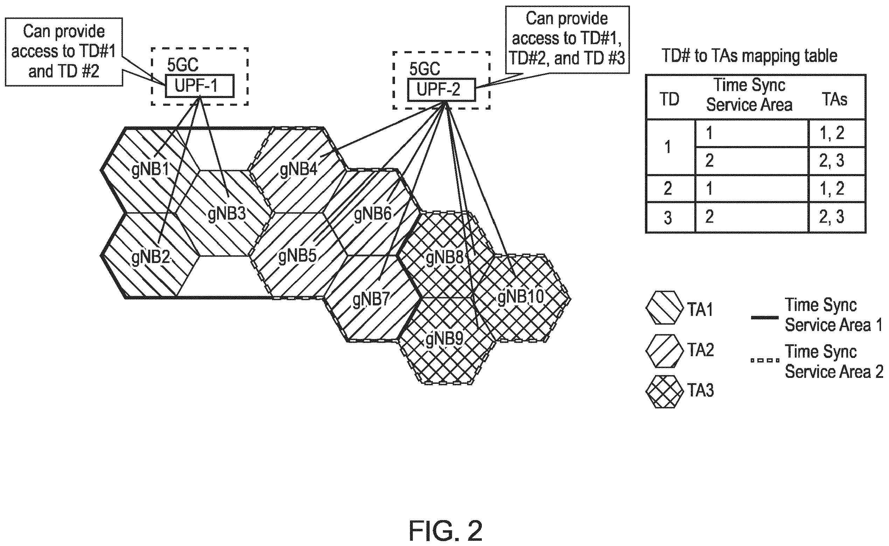

FIG. 2 illustrates a time synchronization service area concept, according to certain example embodiments. In certain example embodiments, the UE-gNB-UPF serving the device during the session (including mobility events) may be assumed to be synchronized using the same 5G clock. In other example embodiments, the time synchronization service area may be mapped to the corresponding tracking area(s) (TAs), which may be comprised of tracking area code(s) (TAC(s)). As illustrated in FIG. 2, a distribution of the time synchronization service area with different options within the 5G network. In particular, an access and mobility function (AMF) may include the time synchronization service area supported in a registration accept message for a given TA to the UE. In this case, the network may be dimensioned in such a way that the TD service area is homogenously supported in the given TA. According to certain example embodiments, the gNB may include time synchronization service area as the broadcast indicator so that the UE(s) may use it for cell selection and/or cell re-selection. This may also be indicated in an "on-demand" system information (SI) towards the UE(s). In some example embodiments, the gNB may also include the time synchronization service area in a dedicated radio resource control (RRC) signaling to individual UE(s) such as, for example for UE(s) that support time sync.

According to certain example embodiments, using the time synchronization service area may benefit the management of time-sync and mobility events (either in RRC idle or connected state) from the UE and network perspective. For instance, in some of these time-sync and mobility events, the UE may be in idle mode. Under idle mode, the UE may use the time synchronization service area information for cell re-selection to ensure that it remains in the time synchronization service area for a given TD (as needed by the end devices). For example, the UE may use the time synchronization service area information if the priority of the UE is to remain or stay synchronized to a certain TD, and the available cells allow the UE to be connected to the cell.

In certain example embodiments, when the UE is in connected mode, the UE may indicate its preference to remain (or not) in the same time synchronization service area to the network. According to certain example embodiments, the preference may be indicated by the UE via signaling to the network. In certain example embodiments, the signaling from the UE may be RRC/non-access stratum (NAS) signaling to let the gNB/AMF better determine the HO criteria. In some example embodiments, the UE's preference may be based on a priority of the time synchronization service area set by the UE. Thus, with this information from the UE, the network (e.g., 5GC/AMF/session management function (SMF)) may determine whether the time synchronization service area is important to the UE for target selection. According to certain example embodiments, if the time synchronization service area is of priority to the UE, the network may move the UE to the target gNB/UPF that supports the same time synchronization service area. However, if the time synchronization service area is of priority to the UE and the target gNB/UPF is not supporting the same time synchronization service area (i.e., target UPF is not able to provide access to the same external time domain as the source UPF), the network may create a tunnel between the source UPF and the target UPF when setting policies to treat the UE and instruct the gNB accordingly. In addition, the tunnel would enable the source UPF to deliver the gPTP message to the target UPF for the same time domain. On the other hand, if the time synchronization service area is not of priority to the UE (compared to remaining connected UEs), then the network may move the UE to the target gNB/UPF that supports the same time synchronization service areas as the preferred target. In this case, it may also be acceptable to handover the UE to a target gNB/UPF that does not support the same time synchronization service area.

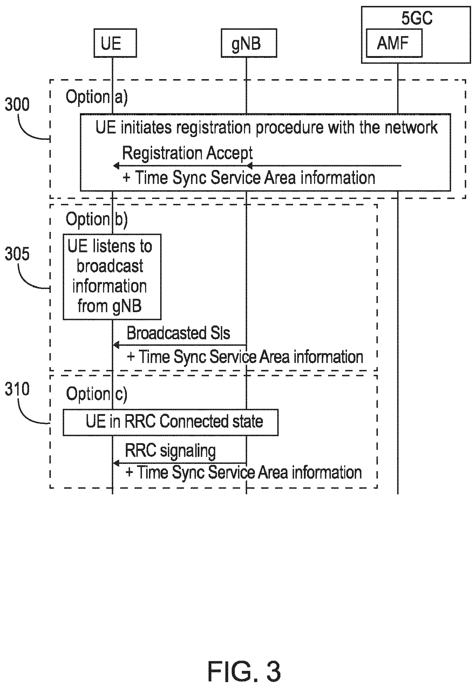

FIG. 3 illustrates a signal diagram for time synchronization service area indication to the UE, according to certain example embodiments. The three alternatives illustrated in FIG. 3 are described above. In particular, in option a) at 300, the UE may initiate a registration request procedure with the network, which may include the 5GC. In response to the request, the network may send a registration accept message via the gNB to the UE for a given TA, which may include time synchronization service area information supported for that TA. In option b) at 305, the UE may listen to broadcast information from the gNB, and the gNB may send response message or broadcast indicator to the UE including broadcasted SIs (system information) and time synchronization service area information so that the UE can use it for cell selection and/or cell re-selection. According to certain example embodiments, the broadcast information may be additional information to the system information already broadcasted to the UE. Further, the new set of information to the UE may be specific to describe the time synchronization service area the UE is camping on. By doing so, the UE may be able to recognize if its TD is supported in the cell. Further, in option c) at 310, the UE may be in an RRC connected state. While in the RRC connected state, the UE may receive RRC signaling from the gNB, which may include time synchronization service area information for the UE that supports time synchronization.

According to certain example embodiments, the time impact of time synchronization service area definition may be end-to-end (e2e) for the UE, radio access network (RAN), and 5G core (5GC). In addition, the different parts of the network may exchange information about time synchronization service area support. For example, the 5GC may maintain a table to map between TD, time synchronization service area, and tracking area codes (TACs). Once the 5GC is aware of the TD the UE needs, the time synchronization service area(s) information that matches the needed TD may be forwarded to the UE. In some example embodiments, it may be desirable for the UE to be able to understand the time synchronization service area for consideration during idle mode mobility, and connected mode HO.

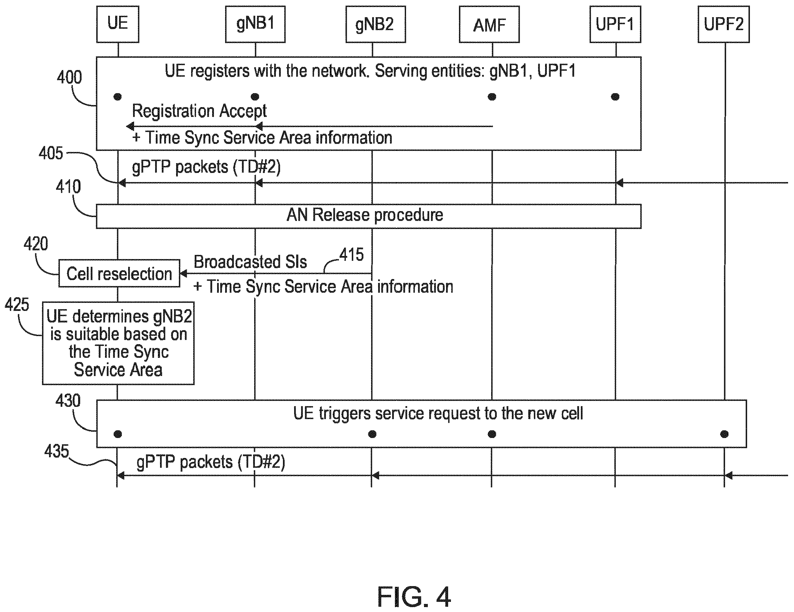

FIG. 4 illustrates a signal diagram of cell re-selection that considers time synchronization service area, according to certain example embodiments. As shown in FIG. 4, the bullet points at 400 and 430 represent the entities that are involved in the action of the box. For example, in the box at 400, the UE, gNB1, AMF, and UPF1 are involved. According to certain example embodiments, the time synchronization service area may impact the UE's mobility management. For example, in RRC_idle mode, the UE may seek to identify a suitable cell. In doing so, the time synchronization service area may be used as a requirement to assure the new cell will keep the TD the UE requires to stay synchronized (see FIG. 4). Thus, depending on the priority the UE has regarding connectivity or time synchronization, time synchronization service area may impact what cells the UE may identify as suitable or acceptable.

As illustrated in FIG. 4, the reselection procedure may include at 400, the UE registering with the 5GC network, which may configure gNB1 and UPF1 to serve the UE and forward packets. After registration, the AMF may send a registration acceptance message to the UE, wherein the registration acceptance message may include time synchronization service area information. At 405, UPF1 may forward gPTP packets/messages corresponding to TD#2 to the UE via gNB1. At 410, an AN release procedure may be initiated. In certain example embodiments, the AN release procedure may be triggered by a (R)AN (i.e., the gNB) or the AMF. According to certain example embodiments, the initiation of the AN release may be due to user inactivity, mobility restriction, or link failure. In addition, the procedure may be used to release the logical NG-AP signaling connection for the UE between the (R)AN and the AMF, an associated N3 user plane connection, (R)AN signaling connections between the UE and the (R)AN, and associated (R)AN resources.

Further, at 415, gNB2 may send broadcast SIs including time synchronization service area information to the UE. At 420, the UE may use the received broadcast SIs and time synchronization service area information for cell selection and/or cell-reselection. Further, at 425, the UE may determine whether gNB2 is suitable to switch to from gNB 1 based on the time synchronization service area information. At 430, the UE may trigger a service request to the new cell (e.g., gNB2), and at 435, the UE may receive gPTP packets from UPF2 via gNB2 corresponding to TD#2.

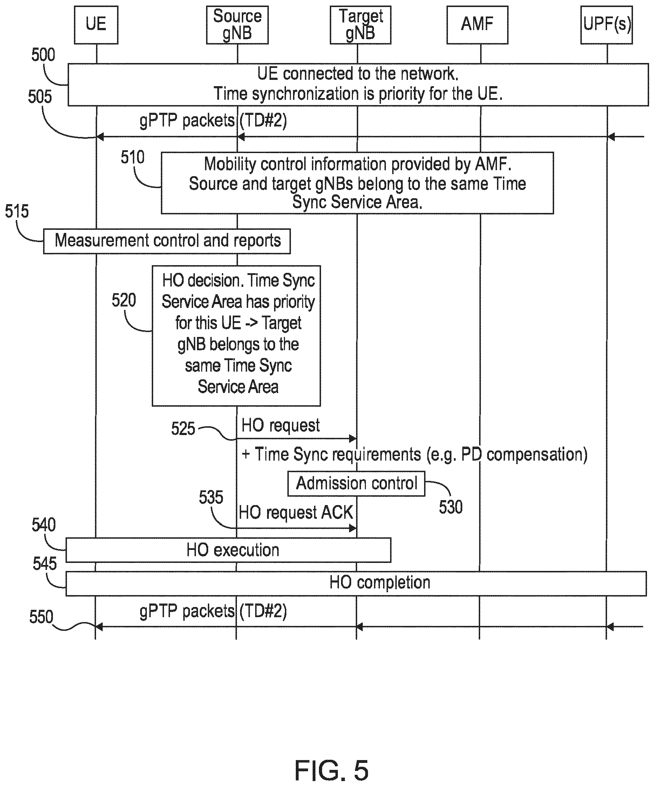

FIG. 5 illustrates a signal diagram of handover (HO) that considers time synchronization service area, according to certain example embodiments. As illustrated in FIG. 5, the time synchronization service area may impact how the gNB decides the HO. According to certain example embodiments, to maintain the time synchronization service during HO, the coordination of both the source and target gNBs may involve being able to keep the time synchronization requirements that the UE has in the target gNB.

As illustrated in FIG. 5, at 500, the UE may be connected and registered with the network (e.g., 5G system involving the source gNB, AMF, SMF, UPF, and PCF), and have an active PDU session. Further, at 500, time synchronization may be a priority for the UE. At 505, the UE may receive gPTP packet messages corresponding to TD#2 from the UPF via the source gNB. In particular, at 505, the UE may receive the time synchronization service area information from the UPF via the source gNB. At 510, mobility control information may be provided to the source gNB by the AMF, and the source gNB and target gNB may belong to the same time synchronization service area. Further, at 515, the UE may provide measurement control information and reports to the source gNB and, at 520, the source gNB may make a handover decision, and decide that handover of the UE from the source gNB to the target gNB is appropriate. According to certain example embodiments, at 520, the UE may have priority for the time synchronization service area, and the target gNB may belong to the same time synchronization service area as the source gNB. After deciding to handover the UE, at 525, the source gNB may send a handover request to the target gNB, and include with the request, the time synchronization requirements (e.g., PD compensation). At 530, the target gNB may authorize the handover and, at 535, receive a handover acknowledgment request from the source gNB. After sending the handover acknowledgment request, at 540, the target gNB may execute handover and, at 545, handover between the source gNB and target gNB may be completed. At 550, the UPF may send gPTP packets corresponding to TD#2 to the UE via the target gNB.

According to certain example embodiments, to maintain the time synchronization service during HO, the coordination of both gNBs may involve the time synchronization requirements the UE has, which can also be kept in the target gNB. Certain example embodiments may provide triggers and corresponding implementation options within the gNB for connected mode HO decision. For instance, one event may relate to a situation where the neighbor cell has a better signal strength offset than a PCell/SPCell. According to certain example embodiments, this trigger may be used to trigger measurement reporting from the UE to the network. According to certain example embodiments, the network may use the measurement report to determine what to do. For instance, the network may use the measurement report to determine the need for HO, trigger HO, and perform HO in connected mode. Furthermore, in this case, HO may be desirable due to, for example, loss of radio frequency (RF), to avoid loss of connectivity, and the time synchronization service area may or may not have priority by the UE in this case. Other example embodiments may include certain triggers that are not as desirable for HO in terms of connectivity loss, but some triggers may be desirable for HO.

In a second event, a neighbor may become better than an absolute threshold, where the absolute threshold according to some example embodiments, may correspond to signal strength. In certain example embodiments, the neighbor cell may become better than an absolute threshold. According to certain example embodiments, this event may not be dependent on coverage of the serving cell (used, for example for load balancing HO). In this case, if the time synchronization service area is of priority for the UE, then this event may be prioritized if the target gNB supports the same time synchronization service area.

In a third event, the PCell/SPCell may become worse than a first absolute threshold of signal strength, and the neighbor/SCell may become better than a second absolute threshold of signal strength. According to certain example embodiments, this event may be used to trigger a time critical handover when a current special cell becomes weak, and it may be necessary to change towards another cell that may not satisfy the criteria for an event handover as the first event previously described. In this case, if the network determines that the event is desirable for HO, the time synchronization service area may or may not have priority for the UE.

In a fourth event, the neighbor cell may have a better offset than the SCell. According to certain example embodiments, this measurement reporting event may be applicable to carrier aggregation. Here, if the time synchronization service area is of priority for the UE, this event may be prioritized if the target gNB supports the same time synchronization service area.

In a fifth event, an inter radio access technology (RAT) neighbor may become better than an absolute threshold of signal strength. According to certain example embodiments, this event may not be dependent on coverage of the serving cell (used, for example, for load balancing HO). In this case, if the time synchronization service area is of priority for the UE, then this event may be prioritized if the target gNB supports the same time synchronization service area.

In a sixth event, the PCell may become worse than a first absolute threshold, and the inter RAT neighbor cell may become better than a second absolute threshold. According to certain example embodiments, this event may be used to trigger inter-RAT mobility procedures when the primary serving cell becomes weak. This event may also be desirable for HO as determined by the network based on measurements reported by the UE, and the time synchronization service area may or may not have priority to the UE in this case.

According to certain example embodiments, if the source and target gNB(s)/UPF(s) are served by different and/or multiple 5G TDs within the same PLMN/NPN, then the source gNB may also provide the supported 5G TD in the context transfer towards the target gNB. According to other example embodiments, if the source and target gNB(s)/UPF(s) are served by multiple 5G TDs for resiliency purpose within the same PLMN/NPN, then the source gNB may use a certain formula (i.e., average of the time provided by the connected 5G clocks) to determine the 5G time domain. In this case, the source gNB may include this in the Xn context towards the target gNB so that the target gNB may continue to use the similar method for 5G TD determination for the given UE.

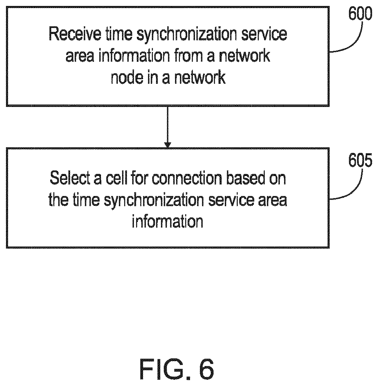

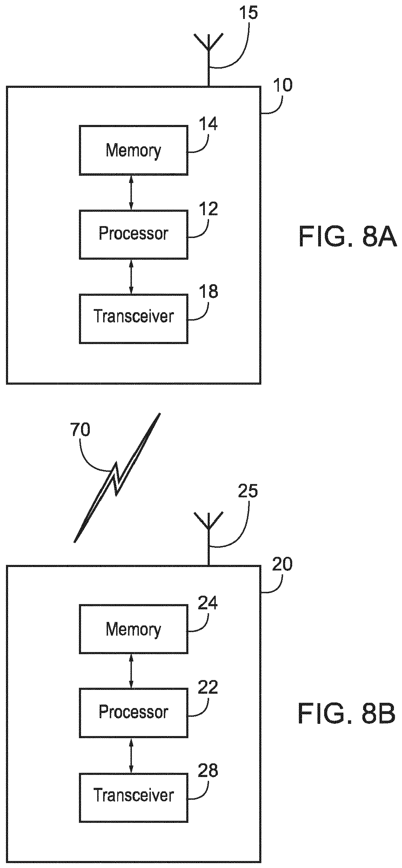

FIG. 6 illustrates a flow diagram of a method, according to certain example embodiments. In certain example embodiments, the flow diagram of FIG. 6 may be performed by a telecommunications network, network entity or network node in a 3GPP system, such as LTE or 5G-NR. For instance, in an example embodiment, the method of FIG. 6 may be performed by mobile station and/or UE, for instance similar to apparatus 10 illustrated in FIG. 8(a).

According to certain example embodiments, the method of FIG. 6 may include, at 600, receiving, at a user equipment, time synchronization service area information from a network node in a network. The method may also include, at 605, selecting a cell for connection based on the time synchronization service area information. According to certain example embodiments, the selected cell may maintain a time domain required by the user equipment to remain synchronized with the network.

According to certain example embodiments, the time synchronizations service area information may include information indicating that a tracking area is homogeneously supporting a time synchronization service area. According to other example embodiments, the time synchronization service area information may include an indication that the network node is in radio resource control signaling. According to further example embodiments, the time synchronization service area information may include a broadcast indicator or an on-demand system information. In some example embodiments, the time synchronization service area information may define an area where the network is able to support time synchronization of the user equipment for an external time domain.

In certain example embodiments, the method may also include sending a measurement report to the network node for determining to maintain the user equipment's connection to a current cell or perform a handover to a different cell. In some example embodiments, the method may further include setting a priority for a time synchronization service area of the selected cell. According to certain example embodiments, the method may also include initiating a registration procedure with a network before receiving the time synchronization service area information. According to other example embodiments, the method may further include listening to broadcast information from the network node before receiving the time synchronization service area information. In certain example embodiments, the time synchronization service area information may be received via radio resource control signaling.

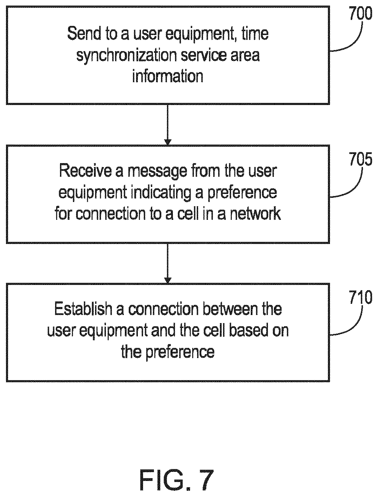

FIG. 7 illustrates a flow diagram of a further method, according to certain example embodiments. In an example embodiment, the method of FIG. 7 may be performed by a telecommunications network, network entity or network node in a 3GPP system, such as LTE or 5G-NR. For instance, in an example embodiment, the method of FIG. 7 may be performed by a target or source base station, target or source eNB, target or source gNB, AMF, or target or source UPF for instance similar to apparatus 20 illustrated in FIG. 8(b).

According to certain example embodiments, the method may include, at 700, sending to a user equipment, time synchronization service area information. The method may also include, at 705, receiving a message from the user equipment indicating a preference for connection to a cell in a network. In certain example embodiments, the preference may be based on the time synchronization service area information. The method may further include, at 710, establishing a connection between the user equipment and the cell based on the preference.

According to certain example embodiments, the cell connected to the user equipment may maintain a time domain required by the user equipment to remain synchronized with the network. According other example embodiments, the method may include establishing a connection to a target cell, different from the cell to which the user equipment is currently connected. According to further example embodiments, establishing the connection to the target cell may be dependent on a trigger. In some example embodiments, the trigger may correspond to an offset measurement between the target cell and another cell, an absolute threshold of the target cell, an absolute threshold between the target cell and the another cell, an absolute threshold of an inter-radio access technology neighbor, or an absolute threshold of a primary cell and the inter-radio access technology neighbor. According to other example embodiments, the preference may include a priority for a time synchronization service area of the target cell. According to further example embodiments, if the target cell does not support the same time synchronization service area as a source cell, the method may further include creating a tunnel between the source cell and the target cell, or between a source user plane function of the source cell and a target user plane function of the target cell. In certain example embodiments, if no priority is indicated by the user equipment, the method may further include moving the user equipment to a target cell that does not support a same time synchronization service area as the user equipment.

According to certain example embodiments, the preference may include a preference to remain connected to a current cell or to connect to a different cell. According to other example embodiments, the time synchronization information may define an area where the network is able to support time synchronization of the user equipment for an external time domain. In some example embodiments, the time synchronization service area information may be sent via radio resource control signaling.

FIG. 8(a) illustrates an apparatus 10 according to an example embodiment. In an embodiment, apparatus 10 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 10 may be implemented in, for instance, a wireless handheld device, a wireless plug-in accessory, or the like.

In some example embodiments, apparatus 10 may include one or more processors, one or more computer-readable storage medium (for example, memory, storage, or the like), one or more radio access components (for example, a modem, a transceiver, or the like), and/or a user interface. In some embodiments, apparatus 10 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 10 may include components or features not shown in FIG. 8(a).

As illustrated in the example of FIG. 8(a), apparatus 10 may include or be coupled to a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in FIG. 8(a), multiple processors may be utilized according to other embodiments. For example, it should be understood that, in certain example embodiments, apparatus 10 may include two or more processors that may form a multiprocessor system (e.g., in this case processor 12 may represent a multiprocessor) that may support multiprocessing. According to certain example embodiments, the multiprocessor system may be tightly coupled or loosely coupled (e.g., to form a computer cluster).

Processor 12 may perform functions associated with the operation of apparatus 10 including, as some examples, precoding of antenna gain/phase parameters, encoding and decoding of individual bits forming a communication message, formatting of information, and overall control of the apparatus 10, including processes illustrated in FIGs. 1-6.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10 to perform any of the methods illustrated in FIGs. 1-6.

In some embodiments, apparatus 10 may also include or be coupled to one or more antennas 15 for receiving a downlink signal and for transmitting via an uplink from apparatus 10. Apparatus 10 may further include a transceiver 18 configured to transmit and receive information. The transceiver 18 may also include a radio interface (e.g., a modem) coupled to the antenna 15. The radio interface may correspond to a plurality of radio access technologies including one or more of GSM, LTE, LTE-A, 5G, NR, WLAN, NB-IoT, Bluetooth, BT-LE, NFC, RFID, UWB, and the like. The radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 18 may be configured to modulate information on to a carrier waveform for transmission by the antenna(s) 15 and demodulate information received via the antenna(s) 15 for further processing by other elements of apparatus 10. In other embodiments, transceiver 18 may be capable of transmitting and receiving signals or data directly. Additionally or alternatively, in some embodiments, apparatus 10 may include an input and/or output device (I/O device). In certain embodiments, apparatus 10 may further include a user interface, such as a graphical user interface or touchscreen.

In an embodiment, memory 14 stores software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software. According to an example embodiment, apparatus 10 may optionally be configured to communicate with apparatus 20 via a wireless or wired communications link 70 according to any radio access technology, such as NR.

According to certain example embodiments, processor 12 and memory 14 may be included in or may form a part of processing circuitry or control circuitry. In addition, in some embodiments, transceiver 18 may be included in or may form a part of transceiving circuitry.

As discussed above, according to certain example embodiments, apparatus 10 may be a UE for example. According to certain embodiments, apparatus 10 may be controlled by memory 14 and processor 12 to perform the functions associated with example embodiments described herein. For instance, in certain example embodiments, apparatus 10 may be controlled by memory 14 and processor 12 to receive time synchronization service area information from a network node in a network. Apparatus 10 may also be controlled by memory 14 and processor 12 to select a cell for connection based on the time synchronization service area information. In certain example embodiments, the selected cell may maintain a time domain required by the user equipment to remain synchronized with the network.

FIG. 8(b) illustrates an apparatus 20 according to an example embodiment. In an example embodiment, the apparatus 20 may be a network element, node, host, or server in a communication network or serving such a network. For example, apparatus 20 may be a network element including, for example, an AMF of 5GC, or a UPF. In other example embodiments, apparatus 20 may be a base station, a Node B, an evolved Node B (eNB), 5G Node B or access point, next generation Node B (NG-NB or gNB), and/or WLAN access point, associated with a radio access network (RAN), such as an LTE network, 5G or NR. It should be noted that one of ordinary skill in the art would understand that apparatus 20 may include components or features not shown in FIG. 8(b).

As illustrated in the example of FIG. 8(b), apparatus 20 may include a processor 22 for processing information and executing instructions or operations. Processor 22 may be any type of general or specific purpose processor. For example, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in FIG. 8(b), multiple processors may be utilized according to other embodiments. For example, it should be understood that, in certain embodiments, apparatus 20 may include two or more processors that may form a multiprocessor system (e.g., in this case processor 22 may represent a multiprocessor) that may support multiprocessing. In certain embodiments, the multiprocessor system may be tightly coupled or loosely coupled (e.g., to form a computer cluster.

According to certain example embodiments, processor 22 may perform functions associated with the operation of apparatus 20, which may include, for example, precoding of antenna gain/phase parameters, encoding and decoding of individual bits forming a communication message, formatting of information, and overall control of the apparatus 20, including processes illustrated in FIGS. 1-5 and 7.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20 to perform the methods illustrated in FIGS. 1-5 and 7.

In certain example embodiments, apparatus 20 may also include or be coupled to one or more antennas 25 for transmitting and receiving signals and/or data to and from apparatus 20. Apparatus 20 may further include or be coupled to a transceiver 28 configured to transmit and receive information. The transceiver 28 may include, for example, a plurality of radio interfaces that may be coupled to the antenna(s) 25. The radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and the like. The radio interface may include components, such as filters, converters (for example, digital-to-analog converters and the like), mappers, a Fast Fourier Transform (FFT) module, and the like, to generate symbols for a transmission via one or more downlinks and to receive symbols (for example, via an uplink).

As such, transceiver 28 may be configured to modulate information on to a carrier waveform for transmission by the antenna(s) 25 and demodulate information received via the antenna(s) 25 for further processing by other elements of apparatus 20. In other embodiments, transceiver 18 may be capable of transmitting and receiving signals or data directly. Additionally or alternatively, in some embodiments, apparatus 20 may include an input and/or output device (I/O device).

In an embodiment, memory 24 may store software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software.

According to some embodiments, processor 22 and memory 24 may be included in or may form a part of processing circuitry or control circuitry. In addition, in some embodiments, transceiver 28 may be included in or may form a part of transceiving circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to cause an apparatus (e.g., apparatus 10 and 20) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 20 may be a network element, node, host, or server in a communication network or serving such a network. For example, apparatus 20 may be a satellite, base station, a Node B, an evolved Node B (eNB), 5G Node B or access point, next generation Node B (NG-NB or gNB), and/or WLAN access point, associated with a radio access network (RAN), such as an LTE network, 5G or NR. According to certain embodiments, apparatus 20 may be controlled by memory 24 and processor 22 to perform the functions associated with any of the embodiments described herein.

For instance, in certain example embodiments, apparatus 20 may be controlled by memory 24 and processor 22 to send to a user equipment, time synchronization service area information. Apparatus 20 may also be controlled by memory 24 and processor 22 to receive a message from the user equipment indicating a preference for connection to a cell in a network. In certain example embodiments, the preference may be based on the time synchronization service area information. Apparatus 20 may further be controlled by memory 24 and processor 22 to establish a connection between the user equipment and the cell based on the preference.

Further example embodiments may provide means for performing any of the functions, steps, or procedures described herein. For example one example embodiment may be directed to an apparatus that includes means for receiving, at a user equipment, time synchronization service area information from a network node in a network. The apparatus may also include means for selecting a cell for connection based on the time synchronization service area information. In certain example embodiments, the selected cell may maintain a time domain required by the user equipment to remain synchronized with the network.

Other example embodiments may be directed to a further apparatus that includes means for sending to a user equipment, time synchronization service area information. The apparatus may also include means for receiving a message from the user equipment indicating a preference for connection to a cell in a network. In certain example embodiments, the preference may be based on the time synchronization service area information. The apparatus may further include means for establishing a connection between the user equipment and the cell based on the preference.

Certain example embodiments described herein provide several technical improvements, enhancements, and /or advantages. In some example embodiments, it may be possible to ensure that a moving UE remains in the network that has connectivity towards TD as required for the TSN end devices. It may also be possible to ensure that the absolute time synchronization is not affected by a handover situation. According to other example embodiments, the time synchronization service area may enable smooth transition between network entities (i.e., gNBs or UPFs) ensuring the UE will stay synchronized with the time domain it wants.

A computer program product may include one or more computer-executable components which, when the program is run, are configured to carry out some example embodiments. The one or more computer-executable components may be at least one software code or portions of it. Modifications and configurations required for implementing functionality of an example embodiment may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (e.g., apparatus 10 or apparatus 20), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

One having ordinary skill in the art will readily understand that the invention as discussed above may be practiced with procedures in a different order, and/or with hardware elements in configurations which are different than those which are disclosed. Therefore, although the invention has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary

- 5GC: 5G Core
- 5GS: 5G System
- AF: Application Function
- AMF: Access and Mobility Management Function
- CN: Core Network
- DL: Downlink
- DN: Data Network
- eNB: Enhanced Node B
- GM: Grand Master
- gNB: 5G or Next Generation NodeB
- gPTP: Generic Precision Time Protocol
- HO: Handover
- LTE: Long Term Evolution
- NEF: Network Exposure Function
- NR: New Radio
- NW: 5G Network
- PCF: Policy Control Function
- PD: Propagation Delay
- RAN: Radio Access Network
- RRC: Radio Resource Control
- SIB: System Information Block
- SMF: Session Management Function
- STA: Station
- TA: Tracking Area
- TAC: Tracking Area Code
- TD: Time Domain
- TSC: Time Sensitive Communications
- TSN: Time Sensitive Networking
- UE: User Equipment
- UL: Uplink
- UPF: User Plane Function

## Claims

1. An apparatus, comprising:
means for receiving, at the apparatus, time synchronization service area information from a network node in a network; and
means for selecting a cell for connection based on the time synchronization service area information, wherein the selected cell maintains a time domain required by the apparatus to remain synchronized with the network.

2. The apparatus according to claim 1, wherein the time synchronization service area information comprises information indicating that a tracking area of the cell is homogeneously supporting a time synchronization service area.

3. The apparatus according to claim 1 or 2, wherein the time synchronization service area information defines an area where the network is able to support time synchronization of the apparatus for an external time domain.

4. The apparatus according to any one of claims 1-3, further comprising:
means for sending a measurement report to the network node for determining whether to maintain the apparatus's connection to a current cell or perform a handover to a different cell.

5. The apparatus according to any one of claims 1-4, further comprising:
means for setting a priority for a time synchronization service area of the selected cell.

6. The apparatus according to any one of claims 1-5, further comprising:
means for initiating a registration procedure with the network before receiving the time synchronization service area information.

7. The apparatus according to any one of claims 1-6, further comprising:
means for listening to broadcast information from the network node before receiving the time synchronization service area information.

8. An apparatus, comprising:
means for sending, to a user equipment, time synchronization service area information;
means for receiving a message from the user equipment indicating a preference for connection to a cell in a network, wherein the preference is based on the time synchronization service area information; and
means for establishing a connection between the user equipment and the cell based on the preference.

9. The apparatus according to claim 8, wherein the cell connected to the user equipment maintains a time domain required by the user equipment to remain synchronized with the network.

10. The apparatus according to claim 8 or 9, further comprising:
means for establishing a connection to a target cell, different from the cell to which the user equipment is currently connected, wherein establishing the connection to the target cell is dependent on a trigger, and
wherein the trigger corresponds to:
an offset measurement between the target cell and another cell,
an absolute threshold of the target cell,
an absolute threshold between the target cell and the another cell,
an absolute threshold of an inter-radio access technology neighbor, or
an absolute threshold of a primary cell and the inter-radio access technology neighbor.

11. The apparatus according to claim 10, wherein the preference comprises a priority for a time synchronization service area of the target cell.

12. The apparatus according to any one of claims 8-11, wherein if no priority is indicated by the user equipment, further comprising:
means for moving the user equipment to a target cell that does not support a same time synchronization service area as the user equipment.

13. The apparatus according to any one of claims 8-12, wherein the preference comprises a preference to remain connected to a current cell or to connect to a different cell.

14. The apparatus according to any one of claims 8-13, wherein the time synchronization service area information defines an area where the network is able to support time synchronization of the user equipment for an external time domain.

15. The apparatus according to any one of claims 8-14, wherein the time synchronization service area information is sent via at least one of a radio resource control signaling, a broadcast system information, and an on-demand system information.
